# DEMANDE DE BREVET EUROPEEN

(11) **EP 3 561 150 A1**
(43) Date de publication de la demande: **30.10.2019**
(21) Numéro de dépôt: 19172851.8
(22) Date de dépôt: 26.11.2015
(51) Int. Cl.: C23C 18/12, C03C 17/00, C03C 17/25

(54) **PROCEDE DE FABRICATION D'UNE COUCHE DE REVETEMENT DE LA FACE INTERNE D'UN RECIPIENT ET RECIPIENT OBTENU AVEC UN TEL PROCEDE**

(62) Demande divisionnaire de: 15808757.7
(71) Demandeur: Glass Surface Technology, 75015 Paris (FR)
(72) Inventeur: WAGNER, Christophe, 75015 PARIS (FR)
(74) Mandataire: Benech, Frédéric

(57) **Abrégé**

La présente invention concerne un procédé et un récipient en verre ou en plastique obtenu par ledit procédé de fabrication d'une couche de revêtement de la face interne d'un récipient propre à contenir des produits biocompatibles avec l'homme et/ou l'animal, dans lequel
- on forme une solution contenant un solvant, de l'eau, un précurseur moléculaire comprenant des groupements alcoxyle et un acide comme catalyseur,
- on mélange cette solution pour initier l'hydrolyse et la condensation,
- on applique la solution ainsi obtenue sur au moins une partie de la face interne du récipient, la solution étant en cours de gélification,
- puis on sèche la solution ainsi appliquée à une température et pendant un temps déterminés, avant cuisson.

L'acide est de l'acide citrique, en ce que l'acide citrique est de concentration inférieure à 6 mol/l et en ce que pour une unité en volume d'acide la solution comprend un volume de précurseur inférieur à 1.5 unité.

## Description

La présente invention concerne un procédé de fabrication d'une couche de revêtement de la face interne d'un récipient.

Elle concerne également un récipient obtenu avec un tel procédé.

Par fabrication d'une couche de revêtement de la face interne d'un récipient, on entend la fabrication d'une solution de recouvrement formant, après gélification puis solidification, une couche de matériau protecteur, ainsi que le recouvrement proprement dit c'est-à-dire l'apposition superficielle d'une telle solution sur la surface d'un objet formé d'un autre matériau, pour créer après gélification et durcissement cette couche de protection de façon solidaire et durable (c'est à dire supérieure à plusieurs années). Un tel revêtement modifie alors les propriétés de surface, physiques et/ou chimiques de cet autre matériau (quand il rentre en contact avec un produit).

L'invention trouve une application particulièrement importante bien que non exclusive dans le domaine de la fabrication de flacons destinés à recevoir et conserver des produits agroalimentaires, pharmaceutiques ou cosmétiques.

Elle permet notamment de minimiser les interactions contenant-contenu, et/ou environnement-contenu, et ce plus particulièrement pour le stockage en flacons de verre, nécessitant la conservation de produits de façon neutre pendant un temps assez long (par exemple plusieurs mois).

Classiquement on entend par verre neutre un verre qui effectue dans le temps, un relargage d'ions, par exemple d'ions sodium ou autres ions alcalins et/ou alcalino-terreux en très faible quantité dans le liquide ou produit qui est à l'intérieur du récipient.

Par très faible quantité on entend un rapport entre masse du liquide contenu et masse totale des éléments extractibles inférieure à 6 ppm.

Le verre sodo-calcique n'est par exemple pas neutre au sens de la pharmacopée.

On sait ainsi que lorsqu'un flacon en verre est fabriqué il est nécessairement porté à des températures importantes.

Celles-ci engendrent notamment une migration des alcali (dans le cas d'un verre au silicate) qui remontent à la surface du verre et/ou à sa proximité immédiate, et ce de façon suffisante pour être exposés ultérieurement au contenu du récipient.

Or, les quantités d'alcali, bien qu'en général très petites, sont gênantes dans le cas de flacons destinés à contenir des vaccins ou des principes actifs, qui doivent rester purs.

En effet l'alcalinité peut causer des effets dangereux sur un produit pharmaceutique, du fait de réactions inacceptables qui pourraient se produire entre la paroi du verre et le produit.

On connaît déjà des moyens d'éviter ce genre d'inconvénients par l'utilisation de dioxyde de soufre et/ou de difluoroéthane ou par traitement à chaud sur la ligne de production des flacons en verre soit au soufre, soit au fluor.

Le sulfate de sodium généré par de tels traitements (voile blanc en surface interne des flacons) est ensuite lavé à l'eau avant remplissage des récipients.

De tels procédés présentent des inconvénients.

Ces procédés sont en effet complexes, onéreux et difficiles à mettre en oeuvre notamment du fait de la manipulation de produits toxiques et/ou polluants (le traitement par sulfure nécessite par exemple la mise en oeuvre de gaz ou poudre de maniement délicat) et pas toujours d'une fiabilité suffisante.

Il est également connu (WO 2010/112792) de recouvrir au moins une fraction d'une face interne d'un récipient par un matériau vitreux élaboré selon un procédé connu de l'homme du métier sous la dénomination Sol-Gel (Diminutif de Solution - Gel).

Le matériau vitreux, à base de silice, est obtenu sans fusion, par polymérisation d'au moins un précurseur moléculaire.

Il comprend une étape de synthèse effectuée à partir d'alcoolates de formule M(OR)ₙ, où M est un métal ou le silicium, et R un groupement organique alkyle CₙH₂ₙ₊₁ dissout dans un solvant usuel, puis une étape plus ou moins longue de gélification avec évaporation du solvant jusqu'à solidification complète.

Il est également connu (EP 2 199 264) des procédés par constitution d'une couche de silicium vitrifiée en surface à une température élevée.

De tels procédés ne permettent pas cependant d'effectuer un revêtement à froid (température ambiante) après fabrication définitive à partir de flacons formés.

On connaît aussi dans des domaines très éloignés de l'invention (optique et électronique) un procédé (Marek Nocum et Al « Sodium diffusion barrier coating prepared by Sol-Gel method », Optica Applicata, 1 janvier 2008, pages 171-179 - XP055066575) dans lequel on revêt une lame de verre d'une couche Sol-Gel recouverte elle-même d'étain.

Un tel procédé, ne laisse pas en contact le contenu du flacon avec la couche Sol-Gel, et ne permet donc pas de maîtriser, par la formulation du Sol-Gel, la protection dans un espace confiné comme un flacon et ce tout en limitant la quantité résiduelle d'éléments nocifs, comme par exemple l'acide.

On connaît encore (FR 2 886 309) une formulation de Sol-Gel pour revêtement d'une surface métallique comprenant des éléments organométalliques (notamment Zi ; Al ; Ti) et des acides agressifs et/ou polluants comme l'acide chlorhydrique.

De tels procédés Sol-Gel comportent l'introduction de nombreux éléments souvent non désirés, pour certains dangereux et contraires à l'utilisation dans le domaine cosmétique et/ou pharmacologique.

Ils sont de plus de mise en oeuvre particulièrement complexe et délicate et ils relèvent d'applications/utilisations spécifiques, peu extrapolables à d'autres situations.

Ils ne permettent donc pas de manière répétitive, simple et adaptable, de revêtir de façon satisfaisante une surface intérieure avec une couche barrière Sol-Gel ayant une adhérence suffisante, et ce indépendamment de la forme du récipient.

Ils nécessitent souvent l'introduction d'éléments supplémentaires et/ou présentant des résidus en quantité importante.

La formulation de la solution doit en effet permettre d'obtenir une viscosité permettant l'application aisée de la solution tout en permettant une cinétique de gélification limitant les effets des bavures lors de l'application, tout en permettant une bonne stabilité dans le temps, ne laissant pas de craquelures dans la couche appliquée après cuisson.

Ils nécessitent de plus en général l'utilisation d'acide ou de base de manière à activer, c'est-à-dire préparer l'état de surface de la surface interne destinée à être recouverte.

Ces acides, aux pH envisagés, sont des produits très actifs, voire dangereux pour le manipulateur et pour le récipient.

Les réactifs de l'art antérieur utilisables avec de tels procédés sont par ailleurs peu disponibles sur le marché et/ou chers, nécessitent des procédures de sécurité contraignantes et imposent des limitations en terme de température, de temps de traitement et de matériaux utilisables.

Des plus les acides utilisés ne sont pas évacuables facilement dans un milieu confiné et ne sont pas éliminés assez efficacement quand on monte en température.

La présente invention vise à fournir un procédé, et un récipient obtenu par un tel procédé, répondant mieux que ceux antérieurement connus aux exigences de la pratique, notamment en ce qu'elle ne demande pas impérativement de produits nocifs pour préparer la paroi interne du flacon ou du récipient avant traitement, en ce qu'elle ne nécessite dès lors pas de rinçage obligatoire avant et/ou après utilisation en ce qu'elle ne laisse pas sur la paroi de composées organométalliques (par exemple oxyde de zirconium, oxyde de titane, oxyde d'étain, oxyde d'alumine ou des oxydes mixtes de ceux-ci), sauf en cas d'additifs spécifiquement ajoutés pour des fonctions déterminées et à l'exception de la formation d'un barrière protectrice contre les relargages, et en ce qu'elle permet de traiter tous les types de flacons, indépendamment des fournisseurs de ceux-ci et ce en engendrant moins de casse ou d'endommagement des récipients que dans l'art antérieur et en ce qu'elle permet de fonctionner en milieu confiné avec application par un pulvérisateur.

L'invention permet également d'être utilisée aussi bien avec des matériaux en verre qu'avec des matériaux en plastique et, d'obtenir de bonnes cinétiques de réaction sur le plan industriel pour des températures de traitement plus faibles que dans l'art antérieur.

La présente invention a donc notamment pour objet de mettre en oeuvre ces principes avec les avantages ci-dessus mentionnés en palliant les inconvénients de l'art antérieur.

Dans ce but, elle propose notamment un procédé de fabrication d'une couche de revêtement de la face interne d'un récipient propre à contenir des produits biocompatibles avec l'homme et/ou l'animal, dans lequel
- on forme une solution contenant un solvant, de l'eau, un précurseur moléculaire comprenant des groupements alcoxyle et un acide comme catalyseur,
- on applique la solution ainsi obtenue sur au moins une partie de la face interne du récipient, la solution étant en cours de gélification,
- puis on sèche la solution ainsi appliquée à une température et pendant un temps déterminé, avant cuisson,
caractérisé en ce que l'acide est de l'acide nitrique ou de l'acide citrique.

Ces acides sont peu couteux et facilement éliminés lors du procédé.

L'invention propose plus particulièrement encore un procédé de fabrication d'une couche de revêtement de la face interne d'un récipient en verre ou en plastique propre à contenir des produits biocompatibles avec l'homme et/ou l'animal, dans lequel
- on forme une solution contenant un solvant, de l'eau, un précurseur moléculaire comprenant des groupements alcoxyle et un acide comme catalyseur,
- on mélange cette solution pour initier l'hydrolyse et la condensation,
- on applique la solution ainsi obtenue sur au moins une partie de la face interne du récipient, la solution étant en cours d'hydrolyse et condensation,
- on sèche la solution ainsi appliquée à une température et pendant un temps déterminé,
caractérisé en ce que l'acide est de l'acide citrique de concentration inférieure ou égale à 6 mol/l et en ce que pour une unité en volume d'acide à ladite concentration la solution comprend un volume de précurseur supérieur ou égal à 1 unité.

Plus précisément, en fonction du précurseur choisi sa quantité en unité de volume est comprise entre 1 et 15, par exemple entre 1 et 12.

Avantageusement, la concentration d'acide est inférieure à 4 mol/l, par exemple inférieure à 2 mol/l par exemple 1.04 mol/l.

Le séchage peut se faire simultanément et/ou postérieurement à l'application de la couche.

Par groupements alcoxy on entend plus particulièrement ici les groupements alcoxyle, c'est-à-dire les espèces chimiques constituées d'un groupe alkyle lié à un atome d'oxygène.

Avec l'invention il est possible de manipuler des acides extraits directement du jus de citron avec une grande facilité d'utilisation et pour des prix faibles en comparaison des autres acides.

L'utilisation de l'acide citrique permet notamment avec l'invention de n'en laisser subsister que des quantités négligeables dans le flacon, par exemple inférieure à 1ppm.

En dépit du processus constant de gélification/solidification il est également possible de conserver sur le long terme le gel (solution partiellement gélifiée) produit à partir de la solution ci-dessus et de travailler à température ambiante.

Le relargage d'ions par le récipient est très réduit.

En d'autres termes, la capacité d'un récipient, dont la face interne est sensiblement entièrement recouverte, de résister au relargage d'éléments est améliorée.

Un tel résultat est obtenu sans traitement ultérieur et dans des conditions de stockage appropriées, les mesures étant effectuées par exemple par le biais des méthodes de détermination prévues par la norme ISO 4802-2, ou par titrage suivant la norme ISO 4802-1.

Classiquement la résistance hydrolytique est mesurée avant traitement, et après traitement, par détermination de la quantité d'oxyde de sodium et d'autres oxydes alcalins ou alcalino-terreux relargués lors d'un traitement en autoclave à 121°C pendant 60 minutes, les mesures étant par exemple ensuite effectuées de façon connue en elle-même par spectrométrie de flamme.

Avec l'invention, on constate ainsi que des relargages ultérieurs notamment tels que testés de façon standardisée en autoclave comme décrit ci-dessus, ne permettent plus de mesurer des taux de relargages significatifs.

Dans des modes de réalisation avantageux, on a par ailleurs et/ou de plus recours à l'une et/ou à l'autre des dispositions suivantes :
- on sèche simultanément à l'application ;
- le séchage est suivi postérieurement par une étape de cuisson dans une plage de température déterminée plus élevée ;
- avant application on ajoute à la solution un surfactant ;
   Avantageusement le surfactant est pris parmi l'un et/ou l'autre des éléments suivants : polyéthylène glycol, cetrimonium bromide, surfactant anionique, polyéthylène glycol p-(1,1,3,3-tetramethylbutyl)-phenyl ether ;
- on sèche à une température supérieure à la température d'ébullition du solvant et de l'acide pendant un temps supérieur à 20 mn en ventilant l'intérieur du récipient.

La ventilation s'effectue par exemple par l'intermédiaire de ventilateurs judicieusement placés de façon connue par l'homme du métier.

Avantageusement le solvant est choisi pour que la température d'ébullition soit proche de celle de l'acide.

A noter que la température d'ébullition à pression atmosphérique de l'acide nitrique est de 121°C et de l'acide citrique 175°C ;
- la solution est de concentration en acide nitrique comprise entre 2 mol/l et 3 mol/l, avantageusement 2.5 mol/l, ou en acide citrique comprise entre 0.02 mol/l et 0.8 mol/l, avantageusement 0.189 mol/l ;
- avant application de la solution sur la face interne, on extrait préalablement de ladite face interne les matières extractibles par au moins trois passages en autoclave avec de l'eau de qualité R ou R1 et/ou de l'eau chargée en NaCl selon une concentration comprise entre 0.5% et 1.2% ;
- avant application de la solution sur la face interne on extrait préalablement de ladite face interne les matières extractibles, par traitement en étuve en atmosphère humide contenant du chlorure de sodium et/ou du gluconate de calcium dissout dans de l'eau dans des proportions suffisantes pour permettre une dissolution complète des molécules concernées ;
- le récipient étant en verre, on le cuit pendant une durée de 20 à 40 mn, à une température de 450° à 550°C lorsque l'acide est de l'acide nitrique et à une température de 530° à 600°C lorsque l'acide est de l'acide citrique ;
- le récipient étant en matière plastique, on le cuit pendant une durée de 40 à 60 mn à une température de 90° à 150°C ;
- on utilise comme précurseur du 3-glycidoxypropyltrimethoxysilane ou de l'orthosilicate de tétraéthyle ;
- on utilise comme solvant du 2-butoxyethanol (sa température d'ébullition à pression atmosphérique est de 172°C) ;
- on mélange le solvant et le précurseur à proportion en poids de sept mesures de solvant pour une mesure d'eau, deux mesures d'acide à concentration comprises pour l'acide nitrique entre 10 mol/l et 18 mol/l, avantageusement 15.55 mol/l, et pour l'acide citrique entre 0.5 mol/l et 4 mol/l, avantageusement 1 mol/l, et deux mesures de précurseur ;
- on adjoint au mélange des additifs adaptés pour réaliser une fonction prise parmi l'ensemble Si02, pigment coloré, oxyde de cérium et/ou Argent;
- après ajout des ingrédients on mélange la solution pendant une durée t comprise entre 25 et 45 minutes à une température comprise entre 15° et 35°C.

Par ingrédients on entend le solvant, l'eau, le précurseur moléculaire, l'acide et les éventuels additifs ;
- on répète au moins trois fois les étapes successives d'application de la solution de revêtement sur au moins une partie de ladite face interne, d'évacuation du produit de revêtement en excès et de cuisson du produit ;
- on mélange successivement dans l'ordre le solvant, le catalyseur acide, l'eau puis le précurseur moléculaire ;
- on effectue préalablement un traitement au plasma atmosphérique.

L'invention propose également un récipient obtenu par le procédé décrit ci-dessus.

Elle concerne également un récipient comprenant une paroi délimitant une cavité propre à contenir des produits biocompatibles avec l'homme et/ou l'animal, ladite paroi présentant une face interne en vis-à-vis de ladite cavité dont au moins une partie est recouverte par un gel solidifié obtenu à partir d'une solution contenant un solvant, de l'eau, un précurseur moléculaire comprenant des groupements alcoxy et un acide comme catalyseur, caractérisé en ce que l'acide est de l'acide nitrique ou citrique.

Avantageusement la solution comprend du SiO2, un pigment coloré, de l'oxyde de cérium et/ou de l'Argent.

Egalement avantageusement elle comprend un surfactant, par exemple pris parmi du polyéthylène glycol et/ou du cetrimonium bromide et/ou des surfactant anionique et/ou du polyéthylène glycol p-(1,1,3,3-tetramethylbutyl)-phenyl ether.

Egalement avantageusement le récipient est en matière plastique ou en verre.

Dans un autre mode de réalisation le récipient est en aluminium.

L'invention sera mieux comprise à la lecture de la description qui suit de modes de réalisation décrits ci-après à titre d'exemples non limitatifs et en référence aux figures qui l'accompagnent dans lesquelles :
La figure 1 est un organigramme montrant les étapes d'un procédé de fabrication d'une couche de revêtement selon un mode de réalisation de l'invention.
La figure 2 montre schématiquement en coupe un mode de réalisation d'un dispositif mettant en oeuvre le procédé selon un mode de réalisation de l'invention.
La figure 3 montre en vue partielle éclatée, un récipient selon un mode de réalisation de l'invention.
Les figures 4A et 4B sont des photographies à l'échelle microscopique d'une portion de la paroi interne d'un récipient revêtue d'une couche Sol-Gel selon un mode de réalisation de l'invention utilisant l'acide citrique respectivement sans et avec ajout d'éléments surfactants.

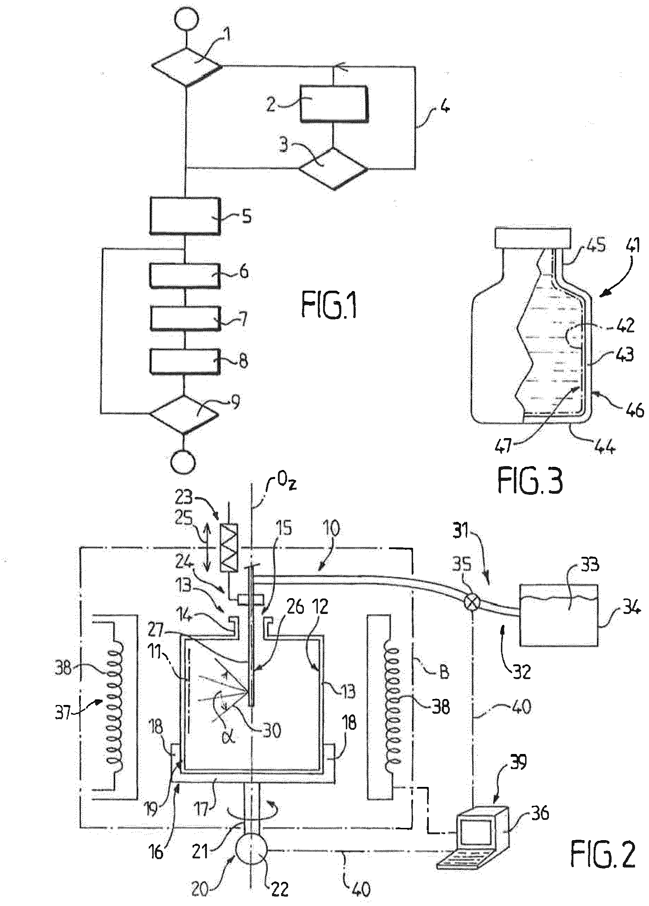

La figure 1 donne l'organigramme des principales étapes du procédé selon le mode de réalisation de l'invention plus particulièrement décrit ici.

Le procédé comporte une étape préliminaire (non représentée) d'approvisionnement en au moins un récipient ou flacon à traiter.

Le récipient est formé d'un matériau qui convenablement traité va permettre de contenir des produits biocompatibles avec l'homme et/ou l'animal c'est à dire compatibles avec une ingestion et/ou une application sur le corps humain ou animal (médicaments, produits cosmétiques...).

Le procédé comprend ensuite ou non (test 1) une étape 2 de passivation de la face interne du récipient.

Rappelons que par passivation on entend une extraction préalable à l'utilisation du flacon, des éléments susceptibles de sortir de la paroi interne du flacon pendant le contact avec un contenu liquide ou pâteux qui y seraient stocké ultérieurement.

L'extraction doit être suffisante pour que les mesures pondérales de ces éléments soient en dessous d'un seuil déterminé fixé par les normes en vigueur.

Dans un mode de réalisation la passivation s'opère par remplissage en liquide aqueux d'extraction, par exemple en eau de qualité R ou R1 puis vidage après un temps déterminé et/ou de l'eau chargée en chlorure de sodium NaCl selon une concentration comprise entre 0.5% et 1.2%, par exemple 0.9%.

Dans un autre mode de réalisation le récipient bouché par exemple par une feuille d'aluminium, est placé en étuve pendant un temps d'au moins trois heures à une température déterminée de plus de 120°.

Dans encore un autre mode de réalisation l'étuve est en atmosphère humide et ladite atmosphère contient du chlorure de sodium et/ou du gluconate de calcium dissous dans de l'eau.

Le gluconate est dissout par exemple à température ambiante, à une concentration inférieure à 35g.l⁻¹ par exemple inférieure à 33g.l⁻¹.

Chacun des modes de réalisation de passivation (étape 2) peut être réitéré plusieurs fois (test 3 lieu 4), par exemple deux fois.

Cette étape de passivation réduit encore la quantité d'ions risquant d'être relargués par la suite dans le contenu du récipient, notamment lorsque la couche de revêtement ne recouvre pas l'intégralité ou la plus grande part de la surface interne du récipient. Elle prépare également avantageusement la face interne pour l'adhésion de la couche de revêtement.

L'étape de passivation peut également être réalisée par un traitement connu de l'homme du métier sous la dénomination plasma-atmosphérique.

Après cette étape on procède, si cela n'a pas été préalablement effectué parallèlement ou par ailleurs par exemple dans un lieu séparé et dans une période de temps avant son application qui peut atteindre plusieurs heures une étape 5 de préparation et formation d'une solution.

L'étape de préparation comprend une étape de mélange des constituants de la couche. Le mélange s'effectue par exemple dans un bac avec agitateur à une température et pendant un temps déterminés, par exemple à une température comprise entre 10°C et 50°C, par exemple comprise entre 15°C et 35°C par exemple 24°C (température ambiante) et mélangé pendant une durée comprise par exemple entre 10 mn et 1 h, par exemple comprise par exemple entre 25 mn et 45 mn, par exemple 30 mn.

Le mélange comprend au moins un solvant, un précurseur moléculaire comprenant des groupements alcoxy (groupe alcoxyle) et un catalyseur par exemple aqueux.

Le catalyseur est un acide. Dans un mode de réalisation l'acide est de l'acide nitrique, dans un autre mode c'est de l'acide citrique ou une combinaison des deux.

Le mélange s'effectue successivement et dans l'ordre suivant : solvant puis le liquide aqueux, c'est-à-dire ajout successif de catalyseur (acide), puis éventuellement de l'eau et finalement un précurseur Silicaté (comprenant de la Silice Si).

Le mélange s'effectue donc dans un liquide aqueux permettant l'hydrolyse du précurseur, et fluidifie le résultat obtenue permettant une application plus aisée.

La solution est de concentration en acide nitrique comprise entre 2 mol/l et 3 mol/l, avantageusement 2.5 mol/l, ou en acide citrique comprise entre 0.02 mol/l et 0.8 mol/l, avantageusement 0.19 mol/l.

La catalyse et le séchage conduisent à obtenir une gélification puis en fonction de la durée et de la température de séchage une solidification.

Dans un autre mode de réalisation il est également possible d'effectuer une cuisson pour donner une couche encore plus dure et/ou solide.

Mais avantageusement il n'y a pas d'étape de cuisson. La température peut être augmentée pendant le séchage, par exemple en continu, mais reste inférieure à une température déterminée i.e. 300°C.

L'absence de cuisson et/ou séchage à température élevée permet étonnamment de réduire la porosité de la couche et du matériau du récipient ce qui réduit les relargages ultérieurs de particules non désirées dans le contenu du récipient.

Dans les modes de réalisation plus particulièrement décrits ici, le solvant est du 2-butoxyethanol (ci-après abrégé 2BOE).

Dans un premier mode de réalisation, le précurseur moléculaire est du 3-glycidoxypropyltrimethoxysilane. L'acide utilisé est alors de l'acide Nitrique.

Le Sol-Gel ainsi obtenu est d'une viscosité qui rend son application dans des récipients de formes complexes plus difficile mais permet une meilleure maîtrise du recouvrement, par exemple d'une viscosité inférieure à 1 Pa.s à température ambiante (environ 24°C).

Dans un deuxième mode de réalisation le précurseur moléculaire est de l'orthosilicate de tétraéthyle connu de l'homme du métier sous la dénomination abrégé TEOS et le catalyseur est de l'acide Nitrique.

L'acide Nitrique permet une bonne hydrolyse du TEOS.

Dans un troisième mode de réalisation le précurseur est de l'orthosilicate de tétraéthyle et le catalyseur est de l'acide citrique.

Dans ce mode de réalisation la quantité d'eau de dissolution de l'acide citrique est suffisante pour qu'il n'y ait pas d'autres apports en eau.

Avantageusement on mélange le solvant (2BOE) et le précurseur à proportion en poids de sept mesures de solvant pour une mesure d'eau, deux mesures d'acide à concentrations comprises pour l'acide nitrique entre 10 mol/l et 18 mol/l, avantageusement 15.55 mol/l, et pour l'acide citrique inférieure à 6 mol/l, par exemple inférieure à 4 mol/l, par exemple comprise entre 0.5 mol/l et 4 mol/l, avantageusement 3.12 mol/l, encore avantageusement 1.04 mol/l ± 0.5 mol/l et deux mesures de précurseur.

Par mesure on entend volume.

On observe en effet que la concentration élevée en acide n'a que peu d'influence sur la résistance hydrolytique de la paroi du récipient recouvert mais à l'inverse qu'une concentration plus faible permet de mieux maitriser et contrôler le dépôt du mélange sur une paroi (cinétique de gélification, viscosité, accroche du Sol-Gel sur la paroi,...) et permet une conservation plus longue du mélange due à une plus faible cinétique de gélification/solidification.

Dans un mode de réalisation les proportions en volume de précurseur et d'acide sont de 1 volume pour 1 volume, plus ou moins 10% dans les conditions normales.

Les résultats de différents essais précurseur TEOS montrent que le dépôt est plus net avec moins de bavures pour des concentrations en acide citrique < 2 mol/l.

L'utilisation d'autres précurseurs donnent des résultats favorables pour des concentrations en acide allant jusqu'à 6 mol/l.

**TABLEAU 1**

| **Essai** | **Conditions de l'essai et composition du mélange** | **Résultats et remarques** |
|---|---|---|
| **1** | 42ml 2BOE + 12ml acide citrique (8g acide citrique + 20ml eau) + 12ml TEOS | Formulation de base pour les comparaisons. |
| **2** | 42ml 2BOE + 12ml acide citrique (12g acide citrique + 20ml eau) + 12ml TEOS | Pas d'amélioration de la résistance hydrolytique. |
| **3** | 42ml 2BOE + 12ml acide citrique (4g acide citrique + 20ml eau ou 1,04 mol/l) + 12ml TEOS | Dépôt plus net, moins de bavures. |
| **4** | 42ml 2BOE + 12ml acide citrique (2g acide citrique + 20ml eau) + 12ml TEOS | Pas d'amélioration des qualités recherchées par rapport à l'essai N°3. |

Chaque ligne représente un essai de formulation et d'application de la solution correspondante, sachant que le tableau n'indique que les éléments ayant fait l'objet de modification pour les essais, les autres éléments et/ou paramètres étant identiques entre les différents essais.

On voit que les essais N°3 et N°4 n'ayant pas la concentration en acide la plus élevée (4g d'acide pour 20 ml d'eau, ou 2 g d'acide pour 20 ml d'eau) obtiennent des résultats meilleurs que les autres essais (pour des concentrations en précurseur TEOS similaires).

On a par ailleurs observé aussi que le résultat est meilleur pour des proportions en précurseurs par rapport au volume d'acide citrique de 1 ou supérieur à 1 (pour le TEOS seul) à 11,45 fois pour d'autres précurseurs.

Dans un mode de réalisation on adjoint au mélange des additifs adaptés pour réaliser une fonction.

Les fonctions peuvent être de bloquer les interactions contenu-contenant et environnement-contenu tel que limiter le relarguage, colorer ou ajouter des effets visuels à la couche, bloquer les rayonnements (UV par exemple), capter de l'oxygène, modifier l'activité de ou l'énergie de surface pour influer sur les facteurs de glissement du produit sur la paroi du récipient, capturer les composés oxygénés et/ou l'oxygène, sécuriser en terme biologique (fonction biocide, antibiotique, ...).

Dans un mode de réalisation on ajoute un surfactant au mélange. Par surfactant on entend un agent chimique modifiant la tension superficielle entre le mélange gélifié et la paroi interne du récipient sur laquelle il est déposé permettant une meilleure adhérence de celui-ci et un meilleur recouvrement de la paroi.

Ces fonctions sont réalisées par adjonction au Sol-Gel en solution d'éléments pris parmi par exemple dans l'ensemble Si02, pigment coloré, oxyde de cérium, Argent et/ou pour ce qui est des surfactants, le polyéthylène glycol (i.e. les composés connus de l'homme du métier sous la dénomination PEG (qui sont des polyéthers linéaires ayant une masse molaire inférieure à 20.000 g/mol, le nombre accolé à PEG désignant la masse molaire du composé considéré, par exemple le PEG 1500 est un polyéthylène glycol de masse molaire moyenne égale à 1500 g/mol)) et/ou cetrimonium bromide (de formule chimique (C₁₆H₃₃)N(CH₃)₃Br) connu sous la dénomination CTAB, et/ou des surfactants anioniques tels que du laurylsulfate de sodium (de formule chimique NaC₁₂H₂₅SO₄) connus sous la dénomination SDS.

A titre d'exemple un polyéthylène glycol utilisé est du polyéthylène glycol p-(1,1,3,3-tetramethylbutyl)-phenyl ether connu sous la dénomination Triton X100™ de la société américaine SIGMA-ALDRICH.

La quantité adjuvée est corrélée à la nature de la fonction recherchée. Par exemple une fonction de blocage peut être réalisée par un ajout de SiO2 en concentration par exemple comprise entre 3.5g.l⁻¹ et 20g.l⁻¹, par exemple comprise entre 4.5g.l⁻¹ et 18g l⁻¹, et/ou une fonction biocide peut être réalisée par un ajout d'argent en concentration par exemple comprise entre 0.9g.l⁻¹ et 2.5g.l⁻¹, par exemple comprise entre 1.1g.l⁻¹ et 2.2g.l⁻¹.

A titre d'exemple pour un mélange comprenant 9 ml de solvant, 4 ml d'acide et 4 ml de précurseur mélangés pendant un temps déterminé entre 30 min et 1 h, on ajoute du surfactant, par exemple du polyéthylène glycol en quantité comprise entre 0.05 g et 0.2 g, par exemple comprise entre 0.08 g et 0.15 g, par exemple 0.1 g dilué dans 5 ml de solvant et lui-même mélangé pendant le même temps déterminé.

Après cette étape, le procédé comprend une étape 6 d'application de la solution en cours de gélification sur au moins une partie de la surface interne du récipient par exemple les 3/4 et/ou pour un motif déterminé (lettres, nom de produits, logos etc...). L'application forme ainsi une couche de revêtement sur ladite portion de la face interne.

La solution ou gel de revêtement est alors régulièrement apposé sur la surface interne du récipient, de façon à obtenir un dépôt d'une épaisseur régulière, sensiblement identique à l'endroit choisi.

L'étape 6 peut être réalisée de plusieurs manières et un mode de réalisation d'un dispositif d'application de la couche selon un mode de réalisation de l'invention sera plus particulièrement décrit en référence à la figure 2.

L'application peut être réalisée immédiatement suite à la formation de la solution, après le début de la gélification ou peut être différée.

Par rapport à une fin de l'étape de préparation de la solution à un instant T0, l'application peut débuter par exemple à un instant déterminé T0+h, h étant une durée en heure.

Le gel étant sensiblement à la même température que celle de la formation de la solution, l'homme du métier adaptera la durée et les conditions de stockage, transport et/ou préparation avant application du différé pour obtenir les conditions rhéologiques (viscosité, vitesse d'accouplement, adhérence,...) optimales et/ou souhaitées pour l'application envisagée, en notant que l'évolution de la viscosité suit l'évolution de la durée.

Par exemple, à température ambiante, h est inférieur à 10 h, par exemple inférieur à 6 heures par exemple 3 h.

Si le gel est conservé à une température déterminée inférieure à la température de formation, la cinétique de l'évolution de ses caractéristiques physico-chimiques étant alors réduites, il peut être conservé pour une application ultérieure pendant plusieurs semaines.

Par exemple, la durée de conservation avant utilisation peut être d'une durée déterminée inférieure à 4 jours, par exemple inférieure à 2 jours dans le mode de réalisation avec acide nitrique et inférieure à 3 semaines, par exemple inférieure à 2 semaines dans le cas de l'utilisation d'acide citrique.

La température est alors par exemple inférieure à 10°C, par exemple inférieure à 5°C par exemple 4°C.

Après l'étape d'application, suit une étape 7 de séchage du gel ainsi appliqué à une température et pendant un temps déterminés, avant éventuelle cuisson.

Dans un mode de réalisation les récipients comprenant une ouverture sont placés avec celle-ci en bas dans le sens vertical, de sorte à évacuer l'excédent de solution appliquée.

Les récipients sont séchés dans une étuve, par exemple ventilée, à une température déterminée et pendant un temps déterminé.

Si le matériau constitutif du récipient est du verre, la température est comprise par exemple entre 50°C et 400°C, par exemple entre 80° et 300°, par exemple 200°, pour une durée de séchage comprise entre 15 mn et 20 h, par exemple entre 12 h et 15 h à 80° et entre 20 mn et 40 mn, par exemple 30 mn à 300°C.

Si le matériau constitutif du récipient est du plastique, la température est comprise par exemple entre 15°C et 40°C, par exemple à température ambiante, pour une durée de séchage comprise entre 10 mn et 120 mn, par exemple 90 mn.

Le séchage est fonction de la nature du solvant, le temps et la température de séchage devant être adaptés à celui-ci. Notamment la température doit être supérieure à la température d'ébullition du solvant à une pression déterminée. Par exemple pour le 2BOE le séchage s'effectue pendant une durée de 20 à 30 mn et à une température supérieure à 172 °C.

Dans un autre mode de réalisation le séchage s'effectue pendant une durée et à une température ci-dessus mentionnées mais les récipients sont placés dans un four, par exemple un four de cuisson.

Dans un mode de réalisation, après le séchage le procédé comprend une étape 8 de cuisson du gel appliqué.

La cuisson s'effectue dans un four, par exemple celui ayant servi au séchage.

Lorsque le récipient est en verre, on le cuit par exemple pendant une durée de 20 à 40 mn, à une température de 450° à 550°C lorsque l'acide est de l'acide nitrique et à une température de 530° à 600°C lorsque l'acide est de l'acide citrique.

Lorsque le récipient est en matière plastique, on le cuit par exemple pendant une durée de 40 à 60 mn à une température de 90° à 150°C lorsque l'acide est de l'acide nitrique ou citrique.

On peut répéter (test 9) un nombre n déterminé de fois les étapes successives d'application de la solution (6) formant produit de revêtement sur une partie de ladite face interne, d'évacuation de la solution de revêtement en excès et de séchage (7) et/ou cuisson (8) du produit.

Le nombre n est par exemple supérieur ou égal à deux, par exemple supérieur ou égal à trois, c'est-à-dire que l'on répète au moins trois fois les étapes.

Une fois cuit, le récipient est ramené à une température ambiante selon une courbe de température déterminée.

La courbe de descente en température du récipient peut être linéaire ou par palier, et suit par exemple une courbe affine par exemple pour ramener le récipient jusqu'à une température ambiante, le coefficient directeur de la courbe de température (de refroidissement) est compris entre 2°C/mn et 5°C/mn.

Une descente en température trop rapide implique des craquelures sur la couche de revêtement et génère des problèmes d'adhérence et de dilatation différentielle de la couche et de la paroi du récipient.

La figure 2 montre un dispositif 10 de revêtement d'au moins une portion 11 de la surface interne 12 d'un récipient 13, selon le mode de réalisation de l'invention plus particulièrement décrit ici.

Le récipient 13 est par exemple un flacon cylindrique en verre allongé autour d'un axe Oz. Il comporte à l'une de ses extrémités 13 (extrémité haute), une ouverture 14 en goulot. L'ouverture du goulot comprend un col 15 de diamètre plus petit que celui du récipient au flacon.

Le récipient forme ainsi sensiblement une enceinte.

Le dispositif comprend un support 16 du récipient, comprenant par exemple une mâchoire 17 de rétention en forme de coupelle ou de U dont les branches 18 enserrent le culot 19, c'est à dire le fond du récipient fixé par des vis latérales (non représentées).

Des moyens 20 de mise en rotation du récipient autour de son axe Oz à une vitesse V déterminée sont prévus. La vitesse V peut être constante ou variable et régulée. Plus précisément les moyens comprennent par exemple une barre 21 rotative d'entrainement du support s'étendant suivant l'axe Oz et un moteur 22 d'entrainement de façon connue en elle-même.

Du côté du goulot 15 du récipient 13 sont montés sur un bâti B, en traits mixtes sur la figure, des moyens 24 d'insertion/extraction (flèche25) d'un outil ou buse 26 d'aspersion à l'intérieur du récipient.

La buse 26 comprend une tige ou tube 27 longitudinal relié à son extrémité 28 aux moyens 24 d'insertion comprenant un actionneur 23 de déplacement longitudinal tel qu'un vérin.

L'action du vérin, solidaire de la buse 26 translate celle-ci d'une position initiale extérieure au récipient 13 à une position de fonctionnement interne au récipient selon l'axe Oz.

Il permet ainsi une descente progressive continue ou par palier de l'outil d'application de la solution (gel en formation) de revêtement sur la surface interne du récipient.

La buse engendre une vaporisation 30 selon un angle solide α de dispersion déterminé dépendant de la pression et de la vitesse d'éjection commandée de façon connue en elle-même.

Le tube est relié, à son extrémité opposée à un système 31 de distribution d'une solution liquide de revêtement à asperger comprenant des moyens 32 d'alimentation en solution 33 liquide ou sensiblement liquide pour permettre l'aspersion, à un débit D déterminé.

Le système 31 comprend ainsi un réservoir 34 de stockage dudit liquide et des moyens 35 de circulation du liquide (pompe doseuse) agencés pour réguler le débit D du liquide via un calculateur 36 et commande également les autres actionneurs mis en oeuvre dans le dispositif.

Le réservoir comprend dans son fond un moyen mélangeur par exemple un agitateur (non représenté).

Le gel de revêtement est un matériau liquide durcissable de revêtement obtenu par le procédé Sol-Gel ci-dessus décrit.

Le dispositif comprend également des moyens 37 de chauffe du récipient 13 connus en eux-mêmes permettant l'élévation de la température d'une partie de la surface interne du récipient jusqu'à un seuil de température déterminé.

Plus précisément l'échauffement de la surface interne s'effectue par exemple par radiation directe à partir de résistances chauffantes 38 disposées à l'extérieur du récipient ou par diffusion autour de la paroi du récipient disposée en contact par exemple avec une moufle de chauffage (non représentée).

Dans un mode de réalisation le récipient et la résistance sont sensiblement confinés dans une même enceinte de sorte à former un four pour un échauffement homogène du récipient.

Le dispositif comprend également un ordinateur ou automate 39 de commande numérique comprenant le calculateur 36.

Ceux-ci sont connectés via un bus 40 de données et de façon connue en elle-même, aux actionneurs du dispositif, à savoir à ceux de la mâchoire de rétention du récipient, c'est à dire du moteur 22 d'actionnement en rotation, à ceux des moyens 24 d'insertion de la buse 26 dans le récipient (vérin), l'agitateur, ainsi qu'à ceux des moyens 35 de circulation/alimentation en liquide (pompe, vanne, buse) et des moyens 37 de chauffe (résistances électriques).

Le calculateur 36 est agencé pour calculer à partir des différentes consignes imposées, une loi de commande de chacun des actionneurs de façon connue en elle-même.

La figure 3 montre en vue partielle éclatée, un exemple de récipient 41 revêtu d'une couche 42 selon un mode de réalisation de l'invention, tel qu'obtenu par le procédé décrit en référence à la figure 1.

Le récipient 41 est allongé, du type flacon, cylindrique avec un goulot et est en verre (mais peut également être en matière plastique ou métallique par exemple en aluminium).

Il comprend une paroi latérale 43 avec un fond 44 et un goulot 45 avec son ouverture.

Les parois latérales et le fond comportent une face externe 46 et une face interne 47.

Dans le mode de réalisation plus particulièrement décrit ici, la totalité de la face interne 47 est recouverte de la couche 42 interne d'épaisseur sensiblement constante.

La couche 42 recouvre également la face interne du goulot 45.

La couche est le résultat du séchage de la solution et de l'éventuelle cuisson du gel selon l'invention. Elle forme une barrière physique et chimique aux éléments constitutifs du récipient et à l'influence externe au récipient (lumière, température, ...) .

La solution et le gel résultant comprennent du SiO2 et/ou un pigment coloré et/ou de l'Argent et/ou un oxyde de cérium.

On observe en effet que les flacons en verre traités selon l'invention, pour usage cosmétique, alimentaire ou pharmaceutique sont d'une résistance améliorée au vieillissement et à l'humidité de l'air, ce qui permet également d'éviter le phénomène connu d'exsudation avec l'air et donc de pouvoir utiliser les flacons traités plusieurs années après traitements sans avoir à les nettoyer.

Ils sont également d'une grande résistance hydrolytique ce qui permet de sécuriser le contact avec le produit et/ou de mettre en contact des produits plus agressifs.

Enfin, avec le procédé selon l'invention les flacons obtenus présentent une propreté améliorée de la surface interne, y compris grâce à l'élimination de poussières et de particules.

A noter que la perte de poids entre la solution initialement appliquée et la couche solide rémanente après séchage et/ou cuisson est importante (division par de l'ordre de 20, et en tous les cas par au moins un facteur 10).

Par exemple, pour 22 mg appliqué, il reste 1.2 mg de matière après séchage et cuisson.

On a donné ci-après sous forme de deux tableaux, à savoir un tableau 2 (sans passivation préalable) et un tableau 3 (avec passivation préalable), les résultats obtenus avec le mode de réalisation du procédé plus particulièrement décrit ci-avant en référence à la figure 1, avec des flacons en verre cylindrique de 100 ml et une seule série d'étapes 5 à 8 en utilisant le protocole de mesure ISO normée.

Chaque essai correspond (colonne Condition de Traitement) à une solution gélifiable dont les paramètres de composition sont précisés, et pour des conditions de température et de durée des étapes 5 à 8 données.

La colonne « résultats RH », donne les valeurs de résistance hydrolytique lors de mesures successives (par exemple il y a eu 6 mesures pour l'essai 8 du tableau 1).

Pour un même « essai », et s'il y a lieu, les mesures sont alors moyennées dans la colonne « Moyenne de RH ». Chaque moyenne est comparée avec la mesure d'une référence (récipient identique et mesure de son RH sans traitement selon le procédé selon l'invention moyennée sur quinze mesures), ladite moyenne étant de 0.12.

Les conditions de référence sont celles considérées ci-dessus comme les conditions normales donnant une résistance hydrolytique de base R0 homogène sans traitement préalable.

**TABLEAU 2 (sans étape préalable 2 de passivation) :**

| Dans les « conditions de traitement » ci-dessous, seuls apparaissent les éléments différents entre chaque « Essai », les éléments communs du mélange pour le dépôt étant : mélange de 7 mesures 2BOE avec 2 mesures de TEOS et 1,25 mesures d'eau. | | | |
|---|---|---|---|
| L'acide citrique est quant à lui à une concentration de l'ordre de 1 mol/l. | | | |
| **Essai** | **Conditions de traitement** | **Résultats RH** | **Moyenne des RH** |
| **1** | dépôt de la couche avec une charge faible SIO2 (4.5g/l) à TO + 3h et cuisson à 500°C | 0,05 | 0,08 |
| | | 0,1 | |
| | | 0,1 | |
| **2** | dépôt à T0 + 3h avec une charge forte SIO2 (18g/l) et cuisson à 500°C | 0,08 | 0,07 |
| | | 0,08 | |
| | | 0,06 | |
| **3** | Avec acide citrique Etape de séchage pendant 12h en étuve à 80° C puis cuisson à 580°C pendant 30 mn en autoclave | 0,07 | 0,03 |
| | | 0,03 | |
| | | 0,03 | |
| **4** | Avec acide citrique Etape de cuisson à 580°C pendant 30 mn avec palier à 300°C pendant 30 mn | 0,01 | 0,01 |
| | | 0,01 | |
| | | 0,02 | |
| | | 0,38 | |
| | | 0,07 | |
| | | 0,1 | |
| | | 0,1 | |

On voit que d'une part l'ajout d'acide citrique améliore la résistivité et d'autre part que de meilleurs résultats sont obtenus dans l'essai sans séchage intermédiaire.

**TABLEAU 3 (avec étape 2 préalable de passivation) :**

| Dans les « conditions de traitement » ci-dessous, seuls apparaissent les éléments différents entre chaque « Essai », les éléments communs du mélange étant : mélange de 7 mesures 2BOE avec 2 mesures de TEOS et 1,25 mesures d'eau. | | | |
|---|---|---|---|
| **Essai** | **Conditions de traitement** | **Résultats RH** | **Moyenne des RH** |
| 1' | Prétraitement au Gluconate de calcium de concentration 33gL-1 pendant 1h en étuve à 90°C puis dépôt avec acide nitrique | 0,1 | 0,06 |
| | | 0,05 | |
| | | 0,04 | |
| 2' | Prétraitement 3 fois par autoclave à 121°C pendant 1h avec eau de qualité Rl et récipient bouché à l'aluminium - avec changement eau entre chaque cycle puis dépôt avec acide citrique puis étape de séchage pendant 12h en étuve à 80°C et étape de cuisson pendant 30 mn à 580°C | 0,02 | 0,02 |
| | | 0,01 | |
| 3' | Idem « Essai 2' » avec trois dépôts successifs | 0,03 | 0,04 |
| | | 0,05 | |
| | | 0,05 | |

On voit aussi que le procédé selon l'invention permet d'obtenir systématiquement une différence significative avec la référence de l'ordre de 0,1 en moyenne sans passivation préalable, et de 0,04 avec passivation. La résistance hydrolytique et donc la capacité de relargage qui lui est proportionnelle sont ainsi améliorées de l'ordre de 50% à 80% avec passivation préalable.

On voit aussi que les mesures effectuées font apparaitre que le mode de réalisation de l'essai 4, dans lequel le procédé est mis en oeuvre par dépôt d'un Sol-Gel avec sept mesures de 2BOE, deux mesures d'acide citrique et deux mesures de TEOS, avec une cuisson à 580°C pendant 30 mn en respectant un palier à 300°C pendant 30 mn, permet de diminuer de près de 10 fois par rapport à l'essai 1 la résistance hydrolytique et donc diminuer d'un facteur dix le relargage dans le produit contenu par le flacon, à conditions égales.

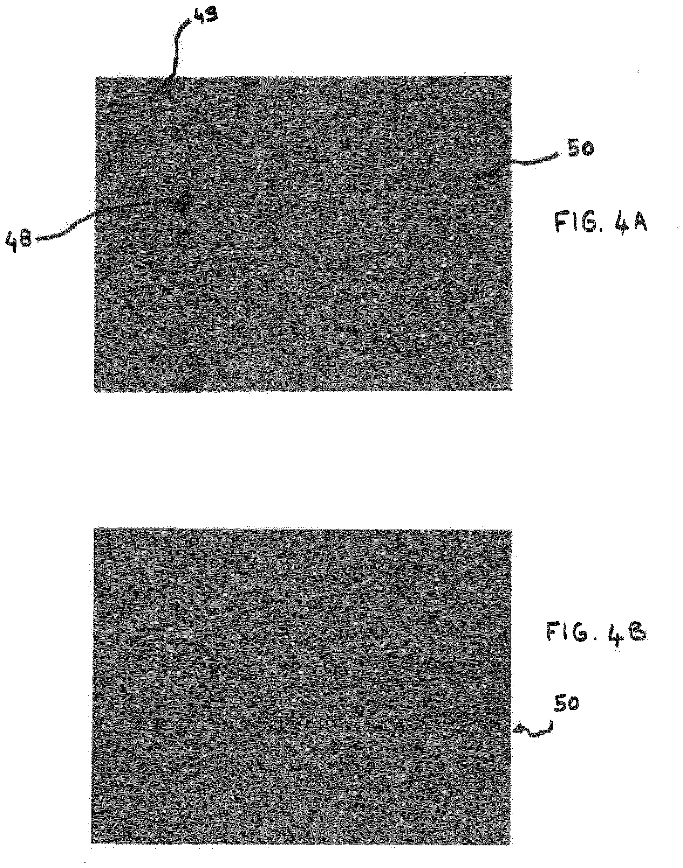

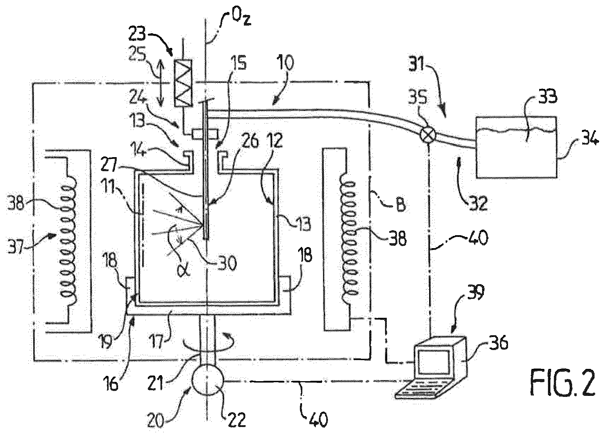

Sur la figure 4A des cloques 48 et des craquelures 49 apparaissent dans la couche de solution 50 déposée et séchée.

Afin de permettre une meilleure accroche et tenue de la couche 50 ainsi que d'améliorer très significativement l'homogénéité de la couche ce qui accroit considérablement la résistance hydrolytique de la paroi résultante, il est possible d'ajouter au mélange formant le Sol-Gel des éléments surfactants.

La figure 4B montre dans les mêmes conditions (formulation, concentration, temps de séchage, temps de mélange, méthode de dépôt,...) que celles de la figure 4A le résultat d'un tel ajout de surfactant, ici un produit connu sous la dénomination PEG 1500.

La densité surfacique de cloques 48 et de craquelures 49 est alors très largement inférieure à celle correspondante sans ajout de surfactant, par exemple dans un rapport supérieur à 40.

Comme il va de soi et comme il résulte également de ce qui précède, la présente invention n'est pas limitée aux modes de réalisation plus particulièrement décrits. Elle en embrasse au contraire toutes les variantes et notamment celles en fonction du matériau (type de verre, de plastique, de céramique ou autre) et des résultats recherchés où les nombre de cycle, les températures et les durées sont déterminées différemment, celles où le récipient est un pot, celles où les zones chauffées comprennent elles-mêmes des sous zones de variation de la température en descente et/ou en montée desdites températures, et celles où les proportions envisagées varient de l'ordre de moins de 20%.

## Revendications

1. Procédé de fabrication d'une couche de revêtement de la face interne d'un récipient en verre ou en plastique propre à contenir des produits biocompatibles avec l'homme et/ou l'animal, dans lequel
- on forme une solution contenant un solvant, de l'eau, un précurseur moléculaire comprenant des groupements alcoxyle et un acide comme catalyseur, et
- on mélange cette solution pour initier l'hydrolyse et la condensation,
**caractérisé en ce que**
l'acide étant de l'acide citrique,
- on applique la solution ainsi obtenue sur au moins une partie de la face interne du récipient,
la solution étant en cours d'hydrolyse et condensation, et
- on sèche la solution ainsi appliquée à une température et pendant un temps déterminé, pour former une couche protectrice barrière de telle sorte que les interactions récipient contenant/ produit contenu sont réduites, que la résistance au relargage d'éléments par le récipient est améliorée, la solution ainsi appliquée et séchée étant agencée pour permettre la conservation des produits de façon neutre.

2. Procédé selon la revendication 1, **caractérisé en ce que** l'acide citrique est de concentration inférieure ou égale à 6 mol/l, pour former ladite couche protectrice par séchage de la solution appliquée à ladite température et pendant ledit temps déterminé.

3. Procédé selon la revendication 2, caractérisé ce que pour une unité en volume d'acide à ladite concentration la solution comprend entre 1 et 12 unités en volume de précurseur.

4. Procédé selon la revendication 2, **caractérisé en ce que** la concentration d'acide citrique est inférieure à 2 mol/l.

5. Procédé selon l'une quelconque des revendications précédentes, **caractérisé en ce qu'**avant application on ajoute à la solution un surfactant.

6. Procédé selon la revendication 5, **caractérisé en ce que** le surfactant est pris parmi : le polyéthylène glycol et/ou le cetrimonium bromide et/ou des surfactants anioniques et/ou le polyéthylène glycol p-(1,1,3,3-tetramethylbutyl)-phenyl ether.

7. Procédé selon l'une quelconque des revendications précédentes, **caractérisé en ce que** la solution est de concentration en acide citrique comprise entre 0.02 mol/l et 0.8 mol/l.

8. Procédé selon l'une quelconque des revendications précédentes, **caractérisé en ce qu'**avant application de la solution sur la face interne, on extrait préalablement de ladite face interne les matières extractibles par au moins trois passages en autoclave avec de l'eau de qualité R ou R1 et/ou de l'eau chargée en NaCl selon une concentration comprise entre 0.5% et 1.2%.

9. Procédé selon l'une quelconque des revendications 1 à 8, **caractérisé en ce qu'**avant application de la solution sur la face interne on extrait préalablement de ladite face interne les matières extractibles, par traitement en étuve en atmosphère humide contenant du chlorure de sodium et/ou du gluconate de calcium dissout dans de l'eau dans des proportions suffisantes pour permettre une dissolution complète des molécules concernées.

10. Procédé selon l'une quelconque des revendications précédentes, **caractérisé en ce qu'**on utilise comme précurseur du 3-glycidoxypropyltrimethoxysilane ou de l'orthosilicate de tétraéthyle.

11. Procédé selon l'une quelconque des revendications précédentes, **caractérisé en ce qu'**on mélange le solvant et le précurseur à proportion de sept mesures de solvant pour une mesure d'eau, deux mesures d'acide à concentration comprise entre 0.5 mol/l et 4 mol/l et deux mesures de précurseur.

12. Procédé selon l'une quelconque des revendications précédentes, **caractérisé en ce qu'**on adjoint au mélange des additifs pris parmi l'ensemble SiO2, pigment coloré, oxyde de cérium et/ou Argent.

13. Procédé selon l'une quelconque des revendications précédentes, **caractérisé en ce qu'**on répète au moins trois fois les étapes successives d'application du liquide de revêtement sur au moins une partie de ladite face interne, d'évacuation du produit de revêtement en excès et de séchage du produit.

14. Procédé selon l'une quelconque des revendications précédentes, **caractérisé en ce que** la température de séchage est augmentée de façon continue, jusqu'à ladite température déterminée, sans opération de cuisson ultérieure.

15. Récipient en verre ou en plastique comprenant une paroi délimitant une cavité propre à contenir des produits biocompatibles avec l'homme et/ou l'animal, ladite paroi présentant une face interne en vis-à-vis de ladite cavité dont au moins une partie est recouverte par une couche de gel solidifié obtenu à partir d'une solution contenant un solvant, de l'eau, un précurseur moléculaire comprenant des groupements alcoxy et un acide comme catalyseur, **caractérisé en ce que** la couche est obtenue par le procédé selon l'une quelconque des revendications précédentes.

16. Récipient selon la revendication 15, **caractérisé en ce que** la solution comprend du SiO2, un pigment coloré, de l'oxyde de cérium et/ou de l'Argent.
